# EUROPEAN PATENT SPECIFICATION

(11) **EP 1 443 280 B1**
(45) Date of publication and mention of the grant of the patent: **04.04.2007**
(21) Application number: 03292763.4
(22) Date of filing: 04.11.2003
(51) Int. Cl.: F24F 3/14, F24F 11/00

(54) **Dehumidification method of an air conditioner**
Entfeuchtungsverfahren einer Klimaanlage
Procede de deshumidification d'un appareil de climatisation

(30) Priority: 30.01.2003 KR 2003006084
(43) Date of publication of application: 04.08.2004
(73) Proprietor: LG Electronics Inc., Yongdungpo-gu Seoul (KR)
(72) Inventor: Choi, Ho Seon, Dongjak-gu Seoul (KR); Lee, Gi Seop, Namdong-gu Incheon-si (KR); Yum, Kwan Ho, Guro-gu Seoul (KR); Ryu, Yun Ho, Gangnam-gu Seoul (KR); Huh, Deok, Bucheon-si Gyeonggi-do (KR); Oh Il, Kwon, Seongdong-gu Seoul (KR)
(74) Representative: Pichat, Thierry

(56) References cited:
- EP-A- 0 893 657
- US-A- 4 744 223
- US-A- 4 813 474
- US-A- 5 062 276
- US-A- 5 345 776
- US-A- 5 353 862
- PATENT ABSTRACTS OF JAPAN vol. 006, no. 184 (M-157), 21 September 1982 (1982-09-21) & JP 57 092635 A (TOSHIBA CORP), 9 June 1982 (1982-06-09)
- PATENT ABSTRACTS OF JAPAN vol. 010, no. 006 (M-445), 11 January 1986 (1986-01-11) & JP 60 169039 A (MITSUBISHI JUKOGYO KK), 2 September 1985 (1985-09-02)
- PATENT ABSTRACTS OF JAPAN vol. 008, no. 124 (M-301), 9 June 1984 (1984-06-09) & JP 59 027145 A (TOKYO SHIBAURA DENKI KK), 13 February 1984 (1984-02-13)

## Description

### BACKGROUND OF THE INVENTION

### Field of the Invention

The present invention relates to a power saving dehumidification method of an air conditioner, and more particularly, to a power saving dehumidification method of an air conditioner in which uncomfortable temperature and humidity are changed to comfortable temperature and humidity, the comfortable temperature and humidity are maintained in response to outdoor load and also compressor operation is optimized and power consumed to drive the air conditioner is remarkably saved.

### Description of the Related Art

In general, an air conditioner provided with a dehumidification function is aimed to remove moisture by arranging a first heat exchanger functioning as a condenser and a second heat exchanger functioning as an evaporator in an indoor heat exchanger unit which is disposed indoors.

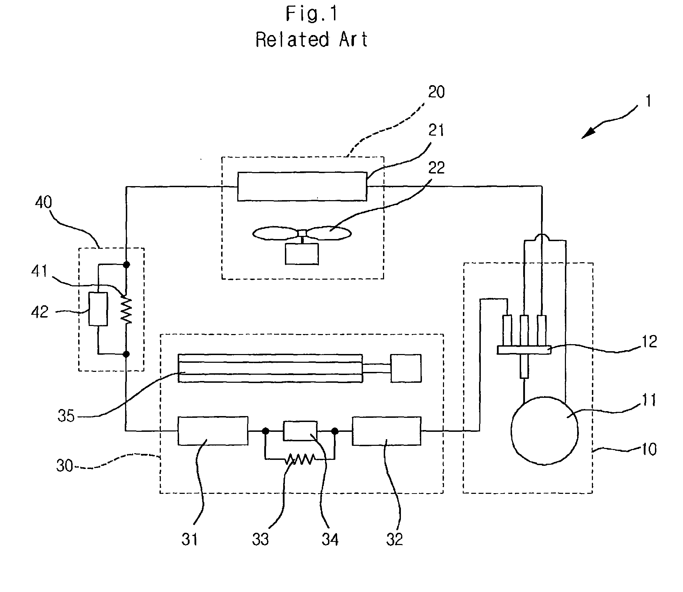

FIG. 1 schematically shows a conventional air conditioner 1.

As shown in FIG. 1, a conventional air conditioner with a dehumidification function includes a compressor unit 10 for compressing coolant, an outdoor heat exchanger unit 20, an indoor heat exchanger unit 30 and an expansion unit 40 disposed between the outdoor heat exchanger unit 20 and the indoor heat exchanger unit 30. The outdoor heat exchanger unit 20 has a heat exchanger 21 and a fan 22 to enable heat exchange between coolant and outdoor air. The indoor heat exchanger unit 30 has a first heat exchanger 31, a second heat exchanger 32 and indoor expanders 33 and 34 disposed between the first and the second heat exchangers 31 and 32.

In more detail, the compressor unit 10 has a compressor 11 for converting low temperature and pressure gas coolant dispensed from the outdoor heat exchanger unit 20 or the indoor heat exchanger unit 30 into high temperature and pressure gas coolant, and a four-way valve 12 for regulating the dispensing direction of the compressor 11.

The four-way valve 12 switches suction and exhaust ducts of the compressor 11 so that the indoor heat exchanger unit 30 may operate as an evaporator in the event of cooling the indoor or as a condenser in the event of heating the indoor.

At this time, the outdoor heat exchanger unit 20 naturally operates as the condenser or the evaporator correspondingly.

However, since description of the invention will be mainly made to the air conditioner as a dehumidifier, hereinafter it is assumed that the outdoor heat exchanger 20 operates as the condenser whereas the indoor heat exchanger 30 operates as the evaporator.

The outdoor heat exchanger unit 20 serves to convert high temperature and pressure gas coolant generated in the compressor unit 10 into middle temperature and high pressure liquid coolant, and is equipped with the condenser 21 and the fan 22 to this end.

The expansion unit 40 is means for converting middle temperature-high pressure liquid coolant dispensed from the outdoor heat exchanger unit 20 into low temperature-pressure liquid coolant. The expansion unit 40 includes a capillary 41 and a first valve 42 disposed parallel with the capillary 41 for regulating flow of liquid coolant through the capillary 41. When the air conditioner operates as a dehumidifier, it is necessary to control the pass of the coolant through the capillary 41 such that the expansion cycle in the expansion unit 40 does not occur. At this time, the first valve 42 is opened such that the liquid coolant passes through the first valve 42, so that the expansion unit 40 will not perform an expansion cycle.

As the expansion cycle is not performed as above, middle temperature-high pressure coolant is introduced into the indoor heat exchanger unit 30. Then, since the indoor heat exchanger unit 30 includes the first heat exchanger 31, the second heat exchanger 32 and the indoor expanders 33 and 34 between the first and second heat exchangers 31 and 32, the first heat exchanger 31 performs a condensing action once more while the indoor expander 33 performs the expansion cycle.

Through the above expansion cycle, middle temperature-high pressure liquid coolant is converted into low temperature-pressure liquid coolant, and the converted low temperature-pressure liquid coolant in the second heat exchanger 32 absorbs surrounding heat to be evaporated into low temperature-pressure gas coolant and the evaporated low temperature-pressure gas coolant is then introduced into the compressor unit 10.

If the air conditioner operates as a cooler instead of the dehumidifier, the expansion unit 40 performs the expansion cycle and the first heat exchanger 31 operates as an evaporator like the second heat exchanger 32. At this time, of course, the second valve 34 of the indoor expander 33 is opened to disable the indoor expander 33.

Hereinafter, an operation of the conventional air conditioner 1 with a dehumidification function will be described in brief.

In the second heat exchanger 32, as the temperature drops owing to evaporation of coolant, ambient moisture is condensed. Thus condensed moisture is discharged to the outside to carry out the dehumidification operation. Of course, since the indoor temperature is also cooled in the above process, the first heat exchanger 31 operates as a condenser to have temperature balance, thereby preventing the indoor temperature from dropping.

The conventional air conditioner performs the dehumidification operation regardless of the humidity difference between the set humidity and the indoor humidity, and the outdoor load, so that it fails to optimize the operation of the compressor and causes waste of the power to operate the air conditioner.

Further, from US-A 5 345 776, is disclosed a conventional power saving dehumidification operation method of an air conditioner, according which the frequency of a compressor is determined and the revolution rate of an outdoor fan is adjusted.

### SUMMARY OF THE INVENTION

Accordingly, the present invention is directed to a power saving dehumidification method of an air conditioner that substantially obviates one or more problems due to limitations and disadvantages of the related art.

Advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, the power saving dehumidification method as provided according to the present invention comprises the steps of: (a) detecting an indoor humidity by an indoor humidity sensor installed in the air conditioner and comparing the detected indoor humidity with a set humidity, to obtain a humidity difference between the detected indoor humidity and the set humidity; (b) setting a revolution rate of the indoor fan according to the humidity difference between the detected indoor humidity and the set humidity obtained in the step (a); (c) setting said frequency of the compressor by the compressor-operating algorithm according to the humidity difference between the detected indoor humidity and the set humidity obtained in the step (a); (d) setting a revolution rate of an outdoor fan to maintain an indoor temperature uniform by an outdoor pan-operating algorithm according to the humidity difference between the detected indoor humidity and the frequency of the compressor obtained in the step (c) and the indoor humidity; and (e) operating the indoor and outdoor fans and the compressor according to the revolution rates of the indoor and outdoor fans and the frequency of the compressor set in the steps (b) to (d), whereby indoor dehumidification operation is continuously performed and said uniform indoor temperature is maintained in a comfortable condition that a user feels a comfortable indoor atmosphere.

The method further comprises the feedback control step of: judging whether the indoor humidity is in a comfortable range and the indoor temperature is maintained to be uniform and if the indoor humidity is not in a comfortable range or the indoor temperature is changed, repeating the steps (a) to (e) until the indoor humidity is in the comfortable range and the indoor temperature is maintained to be uniform.

The step (b) comprises the steps of: (b-1) if the humidity difference between the indoor humidity and the set humidity is less than or equal to 10 % of the set humidity, setting the revolution rate of the indoor fan to be weak wind; and (b-2) if the humidity difference between the indoor humidity and the set humidity is greater than 10 % of the set humidity, setting the revolution rate of the indoor fan to be strong wind.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a schematic view of the conventional air conditioner;

FIG. 2 is a flowchart illustrating a power saving dehumidification method of an air conditioner according to the present invention;

FIG. 3 is a flowchart illustrating that the frequency of the compressor is set through dehumidification determination in a power saving dehumidification method of an air conditioner according to the present invention; and

FIG. 4 is a flowchart illustrates that the frequency of the compressor is set through constant temperature maintaining determination in a power saving dehumidification method of an air conditioner according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

More detailed description of the power saving dehumidification method of an air conditioner according to the present invention will be made now.

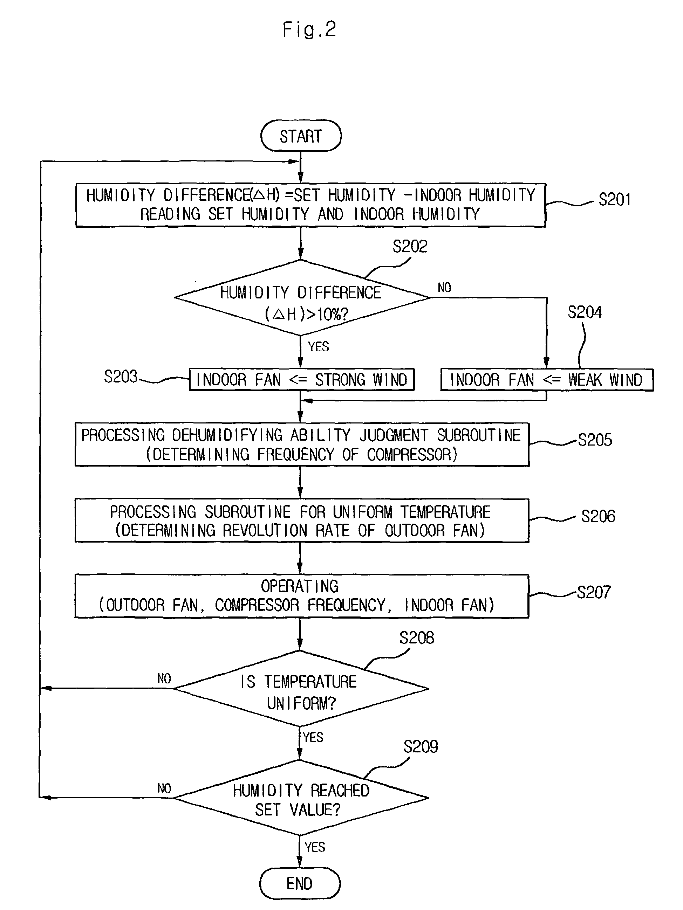

FIG. 2 is a flowchart illustrating a power saving dehumidification method of an air conditioner according to the present invention.

A power saving dehumidification method of an air conditioner comprises the steps of: (a) detecting an indoor humidity by an indoor humidity sensor installed in the air conditioner and comparing the detected indoor humidity with a set humidity (which is set by a controller including a remote controller) to obtain a humidity difference between the detected indoor humidity and the set humidity; (b) setting a revolution rate of an indoor fan according to the humidity difference between the detected indoor humidity and the set humidity obtained in the step (a); (c) setting a frequency of a compressor by a compressor-operating algorithm according to the humidity difference between the detected indoor humidity and the set humidity obtained in the step (a); (d) setting a revolution rate of an outdoor fan by an outdoor pan-operating algorithm according to the humidity difference between the detected indoor humidity and the frequency of the compressor obtained in the step (c) and the indoor humidity; and (e) operating the indoor and outdoor fans and the compressor according to the revolution rates of the indoor and outdoor fans and the frequency of the compressor set in the steps (b) to (d), whereby indoor dehumidification operation is continuously performed and uniform indoor temperature is maintained in a comfortable condition that a user feels a comfortable indoor atmosphere.

The method further comprises the feedback control step of: judging whether the indoor humidity is in a comfortable range and the indoor temperature is maintained to be uniform and if the indoor humidity is not in a comfortable range or the indoor temperature is changed, repeating the steps (a) to (e) until the indoor humidity is in the comfortable range and the indoor temperature is maintained to be uniform.

The step (b) comprises the steps of: (b-1) if the humidity difference between the indoor humidity and the set humidity is less than or equal to 10 % of the set humidity, setting the revolution rate of the indoor fan to be weak wind; and (b-2) if the humidity difference between the indoor humidity and the set humidity is greater than 10 % of the set humidity, setting the revolution rate of the indoor fan to be strong wind.

Referring to FIG. 2, first, when the air conditioner 1 dehumidifies indoor, the indoor humidity sensor installed in the air conditioner 1 detects an indoor humidity, and the indoor humidity is compared with a set humidity (which is set by a controller including a remote controller) to obtain the humidity difference (S201).

The revolution rate of the indoor fan is set according to the humidity difference between the indoor humidity and the set humidity. It is judged whether the humidity difference ΔH is greater than 10 % (S202). If the humidity difference ΔH is greater than 10 % of the set humidity, the revolution rate of the indoor fan is set to be strong wind mode (S203). If the humidity difference between the indoor humidity and the set humidity is less than 10 % of the set humidity, the revolution rate of the indoor fan is set to be weak wind mode (S204).

Then, a subroutine process for judging dehumidification ability is performed in which the frequency of the compressor 11 is set through a compressor-operating algorithm according to the humidity difference between the obtained indoor humidity and the set humidity (S205).

After the frequency of the compressor is set, the revolution rate of the outdoor fan 22 is determined according to a subroutine process for uniform temperature (S206).

The frequency of the compressor 11 and the revolution rates of the indoor fan 35 and the outdoor fan 22 are set through the steps S202 to S206, and the compressor 11, the indoor fan 35 and the outdoor fan 22 are operated according to the set values so that the indoor dehumidification and uniform indoor temperature are maintained continuously in a comfortable range, thereby allowing users to feel the comfortable indoor environment (S207).

It is judged whether the temperature is maintained uniformly (S208). If it is judged that the temperature is maintained uniformly, it is judged whether the humidity reaches a target (set) value (S209).

However, otherwise, the steps S201 to S207 are repeated until the temperature is maintained uniformly.

Also, it is judged whether the humidity reaches a target value (S209). If it is judged that the humidity does not reach the target value, the steps 201 to 207 are repeated until the humidity reaches the target value.

Similarly, the indoor fan, the outdoor fan and the compressor are operated so as to satisfy the uniform indoor temperature and indoor dehumidification target, and a feedback system checks whether the uniform indoor temperature and indoor dehumidification target are satisfied. If it is judged that the uniform indoor temperature and indoor dehumidification target are satisfied, the power saving dehumidification method of an air conditioner according to the present invention is ended.

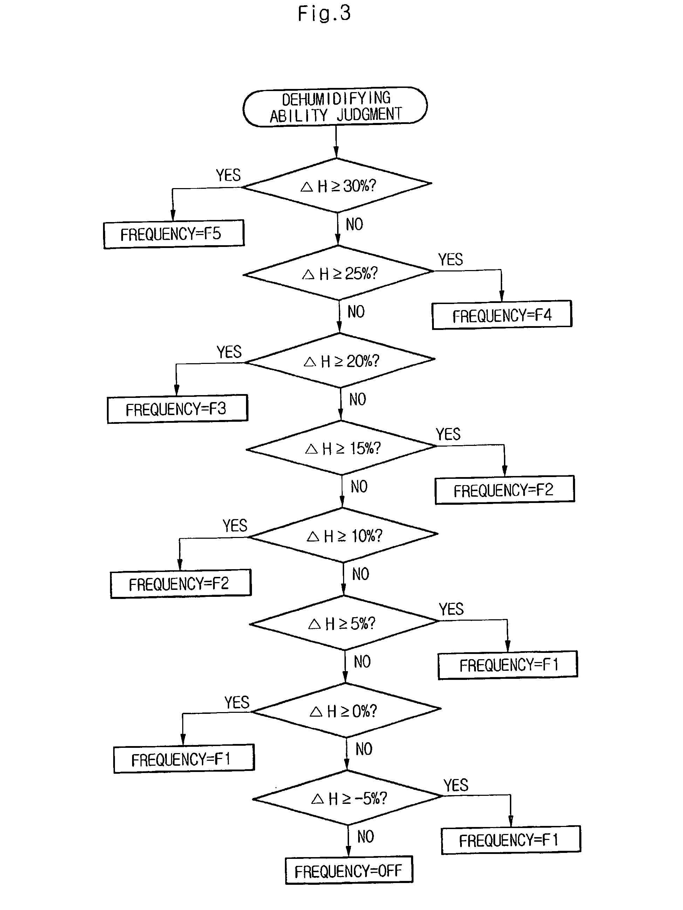

FIG. 3 is a flowchart illustrating that the frequency of the compressor is set through dehumidification determination in a power saving dehumidification method of an air conditioner according to the present invention.

The compressor-operating algorithm, as shown in FIGs. 2 and 3, includes the steps of: a first step of detecting the indoor humidity by the indoor humidity sensor (not shown) installed in the air conditioner 1 and comparing the detected indoor humidity with the set humidity (which is set by a controller such as a remote controller) to obtain the humidity difference between the detected indoor humidity and the set humidity; a second step of comparing the humidity difference obtained in the first step with the set humidity to obtain a fraction of the humidity difference with respect to the set humidity; and a third step of setting the frequency of the compressor 11 corresponding to the fraction of the humidity difference (indoor humidity - set humidity) obtained in the second step.

The compressor-operating algorithm will be described in comparison with Table 1 as follows.

**Table 1**

| H: Set humidity - indoor humidity | |
|---|---|
| COMP F | |
| (Dehumidification Ability) | |
| H | F |
| H≥30% | F5 |
| 25%≤H≤29% | F4 |
| 20%≤H≤24% | F3 |
| 15%≤H≤19% | F2 |
| 10%≤H≤14% | F2 |
| 5%≤H≤9% | F1 |
| 0%≤H≤4% | F1 |
| -5%≤H≤-1% | F1 |
| H≤-6% | OFF |

Table 1 illustrates that the frequency of the compressor 11 is controlled variably according to the humidity difference between the indoor humidity and the set humidity (which is set by a controller such as remote controller) by a compressor-operating algorithm, in which ΔH is the humidity difference between the indoor humidity and the set humidity, and F is the rotation frequency of the compressor.

Referring to Table 1 and FIG. 3, the compressor-operating algorithm in which the frequency of the compressor 11 is controlled variably according to the humidity difference between the indoor humidity and the set humidity (set humidity - indoor humidity) will be described.

First, it is referenced that when the humidity difference, that is, ΔH is 30 % or more, the frequency of the compressor 11 is set to a first compressor frequency F5. When the humidity difference is greater than or equal to 25% and less than or equal to 29%, the frequency of the compressor to a second compressor frequency F4 which is lower than the first compressor frequency F5 by one step. When the humidity difference is greater than or equal to 20% and less than or equal to 24%, the frequency of the compressor is set to a third compressor frequency F3 which is lower than the second compressor frequency F4 by one step. When the humidity difference is greater than or equal to 10% and less than or equal to 20%, the frequency of the compressor is set to a fourth compressor frequency F2 which is lower than the third compressor frequency F3 by one step. When the humidity difference is greater than or equal to -5% and less than or equal to 10%, the frequency of the compressor is set to a fifth compressor frequency F1 which is lower than the fourth compressor frequency F2 by one step. When the humidity difference is -6% or less, the frequency of the compressor is set to 0 (OFF).

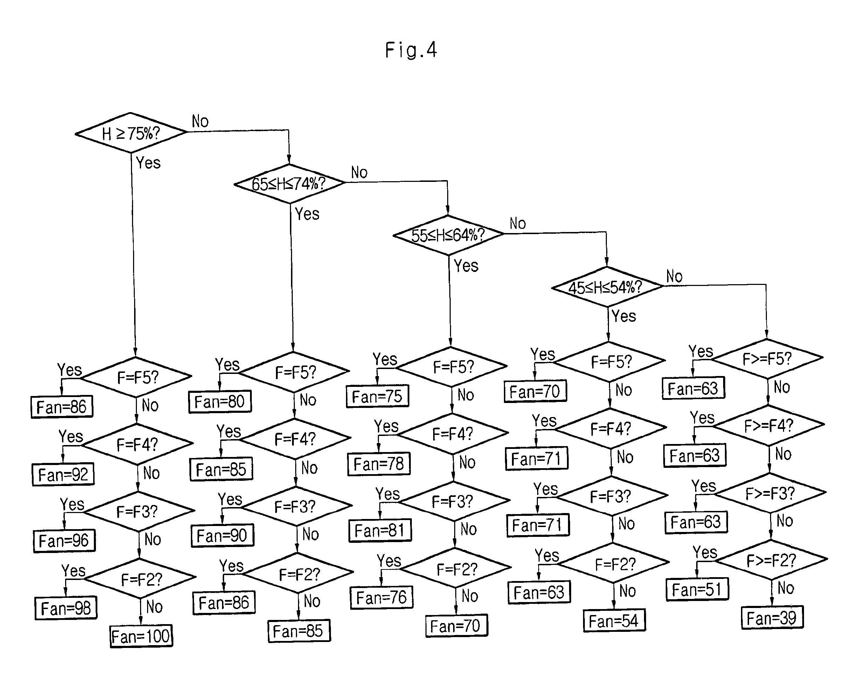

FIG. 4 is a flowchart illustrates that the frequency of the compressor is set through constant temperature maintaining determination in a power saving dehumidification method of an air conditioner according to the present invention.

The outdoor fan-operating algorithm, as shown in FIGs. 2 and 4, includes (d-1) comparing the frequency of the compressor controlled variably by the compressor-operating algorithm with the indoor humidity detected by the indoor humidity sensor installed in the air conditioner 1; and (d-2) setting the revolution rate of the outdoor fan 22 proportional to the variably controlled frequency of the compressor, whereby the indoor dehumidification operation can be performed in a comfortable condition using the variably controlled frequency of the compressor.

The outdoor fan-operating algorithm will be described in comparison with Table 2 as follows.

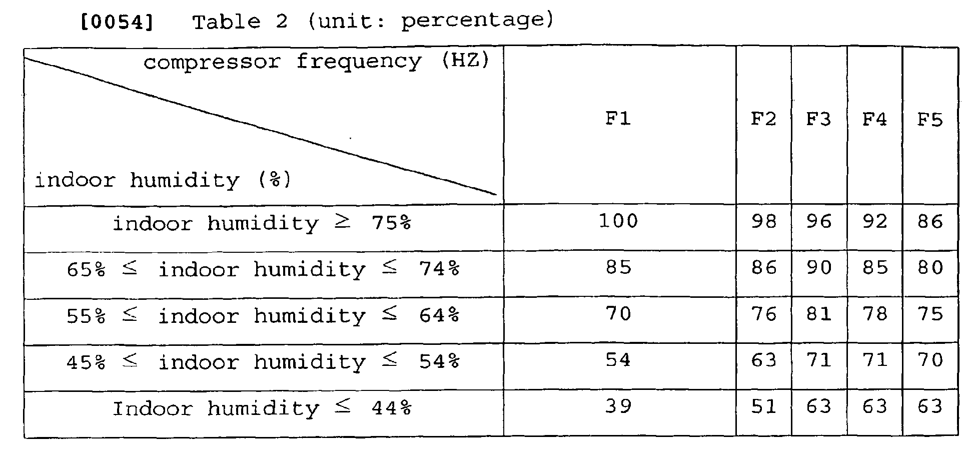

Table 2 illustrates that the revolution rate of the outdoor fan 22 is controlled variably according to the frequency of the compressor 11 set depending on Table 1 and the indoor humidity through an outdoor fan-operating algorithm. F is a rotation frequency of the compressor 11.

Referring to Table 2 and FIG. 4, the revolution rate of the outdoor fan is controlled variably according compressor frequency and indoor humidity set by Table 1.

First, it is referenced that when the indoor humidity (H) is 75 % or more and the frequency of the frequency F of the compressor 11 set by Table 1 is F1, the revolution rate of the outdoor fan is set to 100%. When the indoor humidity is 75 % or more and the frequency of the compressor set by Table 1 is F2, the revolution rate of the outdoor fan is set to 98 %. When the indoor humidity is 75 % or more and the frequency F of the compressor set by Table 1 is F3, the revolution rate of the outdoor fan is set to 96 %. When the indoor humidity is 75 % or more and the frequency of the compressor set by Table 1 is F4, the revolution rate of the outdoor fan is set to 92 %. When the indoor humidity is 75 % or more and the frequency of the compressor set by Table 1 is F5, the revolution rate of the outdoor fan is set to 86 %.

When the indoor humidity is greater than or equal to 65 % and less than or equal to 74 % and the frequency of the compressor set by Table 1 is F1, the revolution rate of the outdoor fan is set to 85 %. When the indoor humidity is greater than or equal to 65% and less than or equal to 74% and the frequency of the compressor set by Table 1 is F2, setting the revolution rate of the outdoor fan is set to 86 %. When the indoor humidity is greater than or equal to 65% and less than or equal to 74% and the frequency of the compressor set by Table 1 is F3, the revolution rate of the outdoor fan is set to 90 %. When the indoor humidity is greater than or equal to 65% and less than or equal to 74% and the frequency of the compressor set by Table 1 is F4, the revolution rate of the outdoor fan is set to 85 %. When the indoor humidity is greater than or equal to 65% and less than or equal to 74% and the frequency of the compressor set by Table 1 is F5, the revolution rate of the outdoor fan is set to 80 %.

When the indoor humidity is greater than or equal to 55% and less than or equal to 64% and the frequency of the compressor set by Table 1 is F1, the revolution rate of the outdoor fan is set to 70 %. When the indoor humidity is greater than or equal to 55% and less than or equal to 64% and the frequency of the compressor set by Table 1 is F2, the revolution rate of the outdoor fan is set to 76 %. When the indoor humidity is greater than or equal to 55% and less than or equal to 64% and the frequency of the compressor set by Table 1 is F3, the revolution rate of the outdoor fan is set to 81 %. When the indoor humidity is greater than or equal to 55% and less than or equal to 64% and the frequency of the compressor set by Table is F4, the revolution rate of the outdoor fan is set to 78 %. When the indoor humidity is greater than or equal to 55% and less than or equal to 64% and the frequency of the compressor set by Table 1 is F5, the revolution rate of the outdoor fan is set to 75 %.

When the indoor humidity is greater than or equal to 45% and less than or equal to 54% and the frequency of the compressor set by Table 1 is F1, the revolution rate of the outdoor fan is set to 54 %. When the indoor humidity is greater than or equal to 45% and less than or equal to 54% and the frequency of the compressor set by Table 1 is F2, the revolution rate of the outdoor fan is set to 63 %. When the indoor humidity is greater than or equal to 45% and less than or equal to 54% and the frequency of the compressor set by the Table 1 is F3, the revolution rate of the outdoor fan is set to 71 %. When the indoor humidity is greater than or equal to 45% and less than or equal to 54% and the frequency of the compressor set by Table 1 is F4, the revolution rate of the outdoor fan is set to 71 %. When the indoor humidity is greater than or equal to 45% and less than or equal to 54% and the frequency of the compressor set by Table 1 is F5, the revolution rate of the outdoor fan is set to 70 %.

When the indoor humidity is 44% or less and the frequency of the compressor set by Table 1 is F1, the revolution rate of the outdoor fan is set to 39 %. When the indoor humidity is 44% or less and the frequency of the compressor set by Table 1 is F2, the revolution rate of the outdoor fan is set to 51 %. When the indoor humidity is 44% or less and the frequency of the compressor set by Table 1 is F3, the revolution rate of the outdoor fan is set to 63 %. When the indoor humidity is 44% or less and the frequency of the compressor set by Table 1 is F4, the revolution rate of the outdoor fan is set to 63 %. When the indoor humidity is 44% or less and the frequency of the compressor set by Table 1 is F5, the revolution rate of the outdoor fan is set to 63 %. The rotation of velocity of the outdoor fan depends on the humidity difference step.

More detailed description will be made on the power saving dehumidification method of an air conditioner according to the present invention.

In order to continuously maintain the indoor dehumidification operation in a comfortable condition where the user can feel comfortable indoor atmosphere, the process is controlled as follows: The humidity difference between the indoor humidity and the set humidity set in the air conditioner 1 is compared with the set humidity and judged. In other words, the indoor humidity is detected by the indoor humidity sensor (not shown) installed in the air conditioner and the detected indoor humidity is compared with a set humidity (which is set by a controller such as a remote controller) to obtain a humidity difference between the detected indoor humidity and the set humidity. A revolution rate of the indoor fan 35 is set according to the humidity difference between the detected indoor humidity and the set humidity obtained in the previous step. At the same time, a frequency of the compressor corresponding to the humidity difference (indoor humidity - set humidity) is set by a compressor-operating algorithm by comparing the humidity difference with the set humidity set in the air conditioner 1.

The revolution rate of the outdoor fan 22 corresponding to the humidity difference (indoor humidity - set humidity) is set by an outdoor pan-operating algorithm by comparing frequency of the compressor 1 with the indoor humidity.

The indoor fan 35, the outdoor fan 22 and the compressor 11 set to the aforementioned revolution rate and frequency are operated so that the indoor dehumidification operation is continuously performed and uniform indoor temperature is maintained in such comfortable condition that a user feels a comfortable indoor atmosphere. It is checked whether the indoor humidity is in a comfortable range and the indoor temperature is maintained to be uniform. If the indoor humidity is not in the comfortable range or the indoor temperature is changed, the steps described above are repeated until the indoor humidity is in the comfortable range and the indoor temperature is maintained to be uniform.

As described above, a power saving dehumidification method of an air conditioner 1 optimizes operation of the compressor, the indoor fan and the outdoor fan according to outdoor load in the air conditioner.

In addition, the compressor, the indoor fan and the outdoor fan are operated to perform dehumidification indoor in response to the outdoor load so that power consumed to drive the air conditioner is greatly saved by 20% to 25 % compared with the conventional air conditioner.

It will be apparent to those skilled in the art that various modifications and variations can be made in the present invention. Thus, it is intended that the present invention covers the modifications and variations of this invention provided they come within the scope of the appended claims and their equivalents.

## Claims

1. A power saving dehumidification method of an air conditioner (1), the method comprising the steps of determining a frequency of a compressor (11) and adjusting the revolution rate of an outdoor fan (22), **characterized in that** it further comprises the steps of:
(a) detecting an indoor humidity by an indoor humidity sensor installed in the air conditioner (1) and comparing the detected indoor humidity with a set humidity, to obtain a humidity difference (ΔH) between the detected indoor humidity and the set humidity;
(b) setting a revolution rate of the indoor fan (35) according to the humidity difference (ΔH) between the detected indoor humidity and the set humidity obtained in the step (a) ;
(c) setting said frequency of the compressor (11) by the compressor-operating algorithm according to the humidity difference (ΔH) between the detected indoor humidity and the set humidity obtained in the step (a);
(d) setting a revolution rate of an outdoor fan (22) to maintain an indoor temperature uniform by an outdoor pan-operating algorithm according to the humidity difference (ΔH) between the detected indoor humidity and the frequency of the compressor (11) obtained in the step (c) and the indoor humidity; and
(e) operating the indoor (35) and outdoor (22) fans and the compressor (11) according to the revolution rates of the indoor (35) and outdoor (22) fans and the frequency of the compressor (11) set in the steps (b) to (d), whereby indoor dehumidification operation is continuously performed and said uniform indoor temperature is maintained.

2. The method according to claim 1, further comprising the feedback control step of: judging whether the indoor humidity is in a comfortable range and the indoor temperature is maintained to be uniform and if the indoor humidity is not in a comfortable range or the indoor temperature is changed, repeating the steps (a) to (e) until the indoor humidity is in the comfortable range and the indoor temperature is maintained to be uniform.

3. The method according to claim 1, wherein the step (b) comprises the steps of:
(b-1) if the humidity difference (ΔH) between the indoor humidity and the set humidity is less than or equal to 10 % of the set humidity, setting the revolution rate of the indoor fan (35) to be weak wind; and
(b-2) if the humidity difference (ΔH) between the indoor humidity and the set humidity is greater than 10 % of the set humidity, setting the revolution rate of the indoor fan (35) to be strong wind.

4. The method according to claim 1, wherein the compressor-operating algorithm includes the steps of:
(c-1) detecting the humidity by the indoor humidity sensor installed in the air conditioner (1) and comparing the detected indoor humidity with the set humidity to obtain the humidity difference (ΔH) between the detected indoor humidity and the set humidity;
(c-2) comparing the humidity difference obtained in the step (c-1) with a set humidity difference (ΔH) set in the air conditioner (1); and
(c-3) setting the frequency of the compressor (11) corresponding to the humidity difference (ΔH) (indoor humidity - set humidity) according to comparison in the step (c-2).

5. The method according to claim 1, wherein the compressor-operating algorithm comprises the steps of:
under a reference that when the humidity difference (ΔH) is 30 % or more, the frequency of the compressor (11) is set to a first compressor (11) frequency F5,
(c-3-i) when the humidity difference (ΔH) is greater than or equal to 25 % and less than or equal to 29 %, setting the frequency of the compressor (11) to a second compressor (11) frequency F4 which is lower than the first compressor (11) frequency F5 by one step;
(c-3-ii) when the humidity difference (ΔH) is greater than or equal to 20 % and less than or equal to 24 %, setting the frequency of the compressor (11) to a third compressor (11) frequency F3 which is lower than the second compressor (11) frequency F4 by one step;
(c-3-iii) when the humidity difference (ΔH) is greater than or equal to 10 % and less than or equal to 19 %, setting the frequency of the compressor (11) to a fourth compressor (11) frequency F2 which is lower than the third compressor (11) frequency F3 by one step;
(c-3-iv) when the humidity difference (ΔH) is greater than or equal to -5 % and less than or equal to 9 %, setting the frequency of the compressor (11) to a fifth compressor (11) frequency F1 which is lower than the fourth compressor (11) frequency F2 by one step; and
(c-3-v) when the humidity difference (ΔH) is -6 % or less, setting the frequency of the compressor (11) to zero (OFF).

6. The method according to claim 1, wherein the outdoor fan-operating algorithm includes the steps of:
(d-1) comparing the frequency of the compressor (11) controlled variably by the compressor-operating algorithm with the indoor humidity detected by the indoor humidity sensor installed in the air conditioner (1) ; and
(d-2) setting the revolution rate of the outdoor fan (22) proportional to the variably controlled frequency of the compressor (11), whereby the indoor dehumidification operation can be performed in a comfortable condition using the variably controlled frequency of the compressor (11).

7. The method according to claim 1, wherein the outer fan-operating algorithm comprises the steps of:
under a reference that when the indoor humidity is 75 % or more and the set frequency of the compressor (11) is F1, the revolution rate of the outdoor fan (22) is set to 100 %,
(d-2-i) when the indoor humidity is 75 % or more and the set frequency of the compressor (11) is F2, setting the revolution rate of the outdoor fan (22) to 98 %;
(d-2-ii) when the indoor humidity is 75 % or more and the set frequency of the compressor (11) is F3, setting the revolution rate of the outdoor fan (22) to 96 %;
(d-2-iii) when the indoor humidity is 75 % or more and the set frequency of the compressor (11) is F4, setting the revolution rate of the outdoor fan (22) to 92 %;
(d-2-iv) when the indoor humidity is 75 % or more and the set frequency of the compressor (11) is F5, setting the revolution rate of the outdoor fan (22) to 86 %;
(d-2-v) when the indoor humidity is greater than or equal to 65% and less than or equal to 74% and the set frequency of the compressor (11) is F1, setting the revolution rate of the outdoor fan (22) to 85 %;
(d-2-vi) when the indoor humidity is greater than or equal to 65% and less than or equal to 74% and the set frequency of the compressor (11) is F2, setting the revolution rate of the outdoor fan (22) to 86 %;
(d-2-vii) when the indoor humidity is greater than or equal to 65% and less than or equal to 74% and the set frequency of the compressor (11) is F3, setting the revolution rate of the outdoor fan (22) to 90 %;
(d-2-viii) when the indoor humidity is greater than or equal to 65% and less than or equal to 74% and the set frequency of the compressor (11) is F4, setting the revolution rate of the outdoor fan (22) to 85 %;
(d-2-ix) when the indoor humidity is greater than or equal to 65% and less than or equal to 74% and the set frequency of the compressor (11) is F5, setting the revolution rate of the outdoor fan (22) to 80 %;
(d-2-x) when the indoor humidity is greater than or equal to 55% and less than or equal to 64% and the set frequency of the compressor (11) is F1, setting the revolution rate of the outdoor fan (22) to 70 %;
(d-2-xi) when the indoor humidity is greater than or equal to 55% and less than or equal to 64% and the set frequency of the compressor (11) is F2, setting the revolution rate of the outdoor fan (22) to 76 %;
(d-2-xii) when the indoor humidity is greater than or equal to 55% and less than or equal to 64% and the set frequency of the compressor (11) is F3, setting the revolution rate of the outdoor fan (22) to 81 %;
(d-2-xiii) when the indoor humidity is greater than or equal to 55% and less than or equal to 64% and the set frequency of the compressor (11) is F4, setting the revolution rate of the outdoor fan (22) to 78 %;
(d-2-xiv) when the indoor humidity is greater than or equal to 55% and less than or equal to 64% and the set frequency of the compressor (11) is F5, setting the revolution rate of the outdoor fan (22) to 75 %;
(d-2-xv) when the indoor humidity is greater than or equal to 45% and less than or equal to 54% and the set frequency of the compressor (11) is F1, setting the revolution rate of the outdoor fan (22) to 54 %;
(d-2-xvi) when the indoor humidity is greater than or equal to 45% and less than or equal to 54% and the set frequency of the compressor (11) is F2, setting the revolution rate of the outdoor fan (22) to 63 %;
(d-2-xvii) when the indoor humidity is greater than or equal to 45% and less than or equal to 54% and the set frequency of the compressor (11) is F3, setting the revolution rate of the outdoor fan (22) to 71 %;
(d-2-xviii) when the indoor humidity is greater than or equal to 45% and less than or equal to 54% and the set frequency of the compressor (11) is F4, setting the revolution rate of the outdoor fan (22) to 71 %;
(d-2-xix) when the indoor humidity is greater than or equal to 45% and less than or equal to 54% and the set frequency of the compressor (11) is F5, setting the revolution rate of the outdoor fan (22) to 70 %;
(d-2-xix) when the indoor humidity is 44% or less and the set frequency of the compressor (11) is F1, setting the revolution rate of the outdoor fan (22) to 39 %;
(d-2-xxi) when the indoor humidity is 44% or less and the set frequency of the compressor (11) is F2, setting the revolution rate of the outdoor fan (22) to 51 %;
(d-2-xxii) when the indoor humidity is 44% or less and the set frequency of the compressor (11) is F3, setting the revolution rate of the outdoor fan (11) to 63 %;
(d-2-xxiii) when the indoor humidity is 44% or less and the set frequency of the compressor (11) is F4, setting the revolution rate of the outdoor fan to 63 %; and
(d-2-xxiv) when the indoor humidity is 44% or less and the set frequency of the compressor (11) is F5, setting the revolution rate of the outdoor fan (22) to 63 %,
whereby the rotation of velocity of the outdoor fan (22) depends on the humidity difference (ΔH) step.

8. The method according to claim 1, comprising determining the frequency of the compressor (11) via the compressor-operating algorithm according to the humidity difference (ΔH) between the set humidity and the indoor humidity.

9. The method according to claim 1, comprising adjusting the revolution rate of the outdoor fan (22) via the outdoor fan-operating algorithm according to said temperature difference between the reference temperature and the indoor temperature.

10. The method according to claim 1, comprising setting the set humidity of step (a) by a controller including a remote controller.

## Patentansprüche

1. Energiesparendes Entfeuchtungsverfahren einer Klimaanlage (1), wobei das Verfahren die Schritte der Ermittlung einer Frequenz eines Kompressors (11) und Einstellung der Drehzahl eines Außenlüfters (22) umfaßt, **dadurch gekennzeichnet, daß** es ferner die Schritte umfaßt:
(a) Detektieren einer Innenfeuchtigkeit durch einen in der Klimaanlage (1) installierten Innenfeuchtigkeitssensor und Vergleichen der detektierten Innenfeuchtigkeit mit einer eingestellten Feuchtigkeit, um eine Feuchtigkeitsdifferenz (ΔH) zwischen der detektierten Innenfeuchtigkeit und der eingestellten Feuchtigkeit zu erhalten,
(b) Einstellen einer Drehzahl des Innenlüfters (35) gemäß der in dem Schritt (a) erhaltenen Feuchtigkeitsdifferenz (ΔH) zwischen der detektierten Innenfeuchtigkeit und der eingestellten Feuchtigkeit,
(c) Einstellen der Frequenz des Kompressors (11) durch den Kompressorbetriebsalgorithmus gemäß der in dem Schritt (a) erhaltenen Feuchtigkeitsdifferenz (ΔH) zwischen der detektierten Innenfeuchtigkeit und der eingestellten Feuchtigkeit,
(d) Einstellen einer Drehzahl eines Außenlüfters (22) zum Aufrechterhalten einer gleichmäßigen Innentemperatur durch einen Außenlüfterbetriebsalgorithmus gemäß der Feuchtigkeitsdifferenz (ΔH) zwischen der detektierten Innenfeuchtigkeit und der in dem Schritt (c) erhaltenen Frequenz des Kompressors (11) und der Innenfeuchtigkeit und
(e) Betreiben der Innen (35)- und Außen (22)- Lüfter und des Kompressors (11) gemäß den in den Schritten (b) bis (d) eingestellten Drehzahlen der Innen (35)- und Außen (22)- Lüfter und der Frequenz des Kompressors (11), wodurch ein Innenentfeuchtigungsbetrieb kontinuierlich durchgeführt wird und die gleichmäßige Innentemperatur aufrechterhalten wird.

2. Verfahren nach Anspruch 1, **dadurch gekennzeichnet, daß** es ferner den Reglungsschritt umfaßt: Beurteilen, ob die Innenfeuchtigkeit in einem angenehmen Bereich liegt und ob die Innentemperatur gleichmäßig gehalten wird, und wenn sich die Innenfeuchtigkeit nicht in einem angenehmen Bereich befindet oder die Innentemperatur verändert ist, Wiederholen der Schritte (a) bis (e), bis die Innenfeuchtigkeit in dem angenehmen Bereich liegt und die Innentemperatur gleichmäßig gehalten wird.

3. Verfahren nach Anspruch 1, **dadurch gekennzeichnet, daß** der Schritt (b) die Schritte umfaßt:
(b-1) wenn die Feuchtigkeitsdifferenz (ΔH) zwischen der Innenfeuchtigkeit und der eingestellten Feuchtigkeit geringer als oder gleich 10% der eingestellten Feuchtigkeit ist, Einstellen der Drehzahl des Innenlüfters (35) auf einen schwachen Wind, und
(b-2) wenn die Feuchtigkeitsdifferenz (ΔH) zwischen der Innenfeuchtigkeit und der eingestellten Feuchtigkeit größer als 10% der eingestellten Feuchtigkeit ist, Einstellen der Drehzahl des Innenlüfters (35) auf starken Wind.

4. Verfahren nach Anspruch 1, **dadurch gekennzeichnet, daß** der Kompressorbetriebsalgorithmus die Schritte enthält:
(c-1) Detektieren der Feuchtigkeit durch den in der Klimaanlage (1) installierten Innenfeuchtigkeitssensor und Vergleichen der detektierten Innenfeuchtigkeit mit der eingestellten Feuchtigkeit, um die Feuchtigkeitsdifferenz (ΔH) zwischen der detektierten Innenfeuchtigkeit und der eingestellten Feuchtigkeit zu erhalten,
(c-2) Vergleichen der in dem Schritt (c-1) erhaltenen Feuchtigkeitsdifferenz mit einer eingestellten Feuchtigkeitsdifferenz (ΔH), die in der Klimaanlage (1) eingestellt ist, und
(c-3) Einstellen der Frequenz des Kompressors (11) entsprechend der Feuchtigkeitsdifferenz (ΔH) (Innenfeuchtigkeit - eingestellte Feuchtigkeit) gemäß dem Vergleich in Schritt (c-2).

5. Verfahren nach Anspruch 1, **dadurch gekennzeichnet, daß** der Kompressorbetriebsalgorithmus die Schritte umfaßt:
als Referenz, wenn die Feuchtigkeitsdifferenz (ΔH) 30% oder mehr beträgt, wird die Frequenz des Kompressors (11) auf eine erste Kompressor (11)- Frequenz F5 eingestellt,
(c-3-i) wenn die Feuchtigkeitsdifferenz (ΔH) größer als oder gleich 25% und geringer als oder gleich 29% ist, Einstellen der Frequenz des Kompressors (11) auf eine zweite Kompressor (11)- Frequenz F4, die um eine Stufe niedriger als die erste Kompressor (11)- Frequenz F5 ist,
(c-3-ii)wenn die Feuchtigkeitsdifferenz (ΔH) größer als oder gleich 20% und geringer als oder gleich 24% ist, Einstellen der Frequenz des Kompressors (11) auf eine dritte Kompressor (11)- Frequenz F3, die um eine Stufe niedriger als die zweite Kompressor (11)- Frequenz F4 ist,
(c-3-iii)wenn die Feuchtigkeitsdifferenz (ΔH) größer als oder gleich 10% und geringer als oder gleich 19% ist, Einstellen der Frequenz des Kompressors (11) auf eine vierte Kompressor (11)- Frequenz F2, die um eine Stufe niedriger als die dritte Kompressor (11)- Frequenz F3 ist,
(c-3-iv)wenn die Feuchtigkeitsdifferenz (ΔH) größer als oder gleich -5% und geringer als oder gleich 9% ist, Einstellen der Frequenz des Kompressors (11) auf eine fünfte Kompressor (11)- Frequenz F1, die um eine Stufe niedriger als die vierte Kompressor (11)- Frequenz F2 ist, und
(c-3-v)wenn die Feuchtigkeitsdifferenz (ΔH) -6% oder geringer ist, Einstellen der Frequenz des Kompressors (11) auf null (AUS).

6. Verfahren nach Anspruch 1, **dadurch gekennzeichnet, daß** der Außenlüfterbetriebsalgorithmus die Schritte umfaßt:
(d-1) Vergleichen der Frequenz des Kompressors (11), die durch den Kompressorbetriebsalgorithmus einstellbar gesteuert wird, mit der Innenfeuchtigkeit, die von dem in der Klimaanlage (1) installierten Innenfeuchtigkeitssensor detektiert wird,
(d-2) Einstellen der Drehzahl des Außenlüfters (22) proportional zur einstellbar gesteuerten Frequenz des Kompressors (11), wodurch der Innenentfeuchtungsbetrieb in einem angenehmen Zustand unter Verwendung der einstellbar gesteuerten Frequenz des Kompressors (11) durchgeführt werden kann.

7. Verfahren nach Anspruch 1, **dadurch gekennzeichnet, daß** der Außenlüfterbetriebsalgorithmus die Schritte umfaßt:
als Referenz, wenn die Innenfeuchtigkeit 75% oder mehr beträgt und die eingestellte Frequenz des Kompressors (11) F1 ist, wird die Drehzahl des Außenlüfters (22) auf 100% eingestellt,
(d-2-i) wenn die Innenfeuchtigkeit 75% oder mehr beträgt und die eingestellte Frequenz des Kompressors (11) F2 beträgt, Einstellen der Drehzahl des Außenlüfters (22) auf 98%,
(d-2-ii) wenn die Innenfeuchtigkeit 75% oder mehr beträgt und die eingestellte Frequenz des Kompressors (11) F3 beträgt, Einstellen der Drehzahl des Außenlüfters (22) auf 96%,
(d-2-iii) wenn die Innenfeuchtigkeit 75% oder mehr beträgt und die eingestellte Frequenz des Kompressors (11) F4 beträgt, Einstellen der Drehzahl des Außenlüfters (22) auf 92%,
(d-2-iv) wenn die Innenfeuchtigkeit 75% oder mehr beträgt und die eingestellte Frequenz des Kompressors (11) F5 beträgt, Einstellen der Drehzahl des Außenlüfters (22) auf 86%,
(d-2-v) wenn die Innenfeuchtigkeit größer als oder gleich 65% und geringer als oder gleich 74% ist und die eingestellte Frequenz des Kompressors (11) F1 beträgt, Einstellen der Drehzahl des Außenlüfters (22) auf 85%,
(d-2-vi) wenn die Innenfeuchtigkeit größer als oder gleich 65% und geringer als oder gleich 74% ist und die eingestellte Frequenz des Kompressors (11) F2 beträgt, Einstellen der Drehzahl des Außenlüfters (22) auf 86%,
(d-2-vii) wenn die Innenfeuchtigkeit größer als oder gleich 65% und geringer als oder gleich 74% ist und die eingestellte Frequenz des Kompressors (11) F3 beträgt, Einstellen der Drehzahl des Außenlüfters (22) auf 90%,
(d-2-viii)wenn die Innenfeuchtigkeit größer als oder gleich 65% und geringer als oder gleich 74% ist und die eingestellte Frequenz des Kompressors (11) F4 beträgt, Einstellen der Drehzahl des Außenlüfters (22) auf 85%,
(d-2-ix) wenn die Innenfeuchtigkeit größer als oder gleich 65% und geringer als oder gleich 74% ist und die eingestellte Frequenz des Kompressors (11) F5 beträgt, Einstellen der Drehzahl des Außenlüfters (22) auf 80%,
(d-2-x) wenn die Innenfeuchtigkeit größer als oder gleich 55% und geringer als oder gleich 64% ist und die eingestellte Frequenz des Kompressors (11) F1 beträgt, Einstellen der Drehzahl des Außenlüfters (22) auf 70%,
(d-2-xi) wenn die Innenfeuchtigkeit größer als oder gleich 55% und geringer als oder gleich 64% ist und die eingestellte Frequenz des Kompressors (11) F2 beträgt, Einstellen der Drehzahl des Außenlüfters (22) auf 76%,
(d-2-xii) wenn die Innenfeuchtigkeit größer als oder gleich 55% und geringer als oder gleich 64% ist und die eingestellte Frequenz des Kompressors (11) F3 beträgt, Einstellen der Drehzahl des Außenlüfters (22) auf 81 %,
(d-2-xiii)wenn die Innenfeuchtigkeit größer als oder gleich 55% und geringer als oder gleich 64% ist und die eingestellte Frequenz des Kompressors (11) F4 beträgt, Einstellen der Drehzahl des Außenlüfters (22) auf 78%,
(d-2-xiv)wenn die Innenfeuchtigkeit größer als oder gleich 55% und geringer als oder gleich 64% ist und die eingestellte Frequenz des Kompressors (11) F5 beträgt, Einstellen der Drehzahl des Außenlüfters (22) auf 75%,
(d-2-xv) wenn die Innenfeuchtigkeit größer als oder gleich 45% und geringer als oder gleich 54% ist und die eingestellte Frequenz des Kompressors (11) F1 beträgt, Einstellen der Drehzahl des Außenlüfters (22) auf 54%,
(d-2-xvi)wenn die Innenfeuchtigkeit größer als oder gleich 45% und geringer als oder gleich 54% ist und die eingestellte Frequenz des Kompressors (11) F2 beträgt, Einstellen der Drehzahl des Außenlüfters (22) auf 63%,
(d-2-xvii)wenn die Innenfeuchtigkeit größer als oder gleich 45% und geringer als oder gleich 54% ist und die eingestellte Frequenz des Kompressors (11) F3 beträgt, Einstellen der Drehzahl des Außenlüfters (22) auf 71 %,
(d-2-xviii) wenn die Innenfeuchtigkeit größer als oder gleich 45% und geringer als oder gleich 54% ist und die eingestellte Frequenz des Kompressors (11) F4 beträgt, Einstellen der Drehzahl des Außenlüfters (22) auf 71 %,
(d-2-xix) wenn die Innenfeuchtigkeit größer als oder gleich 45% und geringer als oder gleich 54% ist und die eingestellte Frequenz des Kompressors (11) F5 beträgt, Einstellen der Drehzahl des Außenlüfters (22) auf 70%,
(d-2-xix) wenn die Innenfeuchtigkeit 44% oder weniger und die eingestellte Frequenz des Kompressors (11) F1 beträgt, Einstellen der Drehzahl des Außenlüfters (22) auf 39%,
(d-2-xxi) wenn die Innenfeuchtigkeit 44% oder weniger und die eingestellte Frequenz des Kompressors (11) F2 beträgt, Einstellen der Drehzahl des Außenlüfters (22) auf 51%,
(d-2-xxii) wenn die Innenfeuchtigkeit 44% oder weniger und die eingestellte Frequenz des Kompressors (11) F3 beträgt, Einstellen der Drehzahl des Außenlüfters (22) auf 63%,
(d-2-xxiii) wenn die Innenfeuchtigkeit 44% oder weniger und die eingestellte Frequenz des Kompressors (11) F4 beträgt, Einstellen der Drehzahl des Außenlüfters auf 63%,
(d-2-xxiv) wenn die Innenfeuchtigkeit 44% oder weniger und die eingestellte Frequenz des Kompressors (11) F5 beträgt, Einstellen der Drehzahl des Außenlüfters (22) auf 63%,
wodurch die Geschwindigkeit des Außenlüfters (22) von der Feuchtigkeitsdifferenz (ΔH)-Stufe abhängt.

8. Verfahren nach Anspruch 1, **dadurch gekennzeichnet, daß** es Ermittlung der Frequenz des Kompressors (11) über den Kompressorbetriebsalgorithmus gemäß der Feuchtigkeitsdifferenz (ΔH) zwischen der eingestellten Feuchtigkeit und der Innenfeuchtigkeit umfaßt.

9. Verfahren nach Anspruch 1, **dadurch gekennzeichnet, daß** es Einstellen der Drehzahl des Außenlüfters (22) über den Außenlüfterbetriebsalgorithmus gemäß der Temperaturdifferenz zwischen der Referenztemperatur und der Innentemperatur umfaßt.

10. Verfahren nach Anspruch 1, **dadurch gekennzeichnet, daß** es Einstellen der eingestellten Feuchtigkeit von Schritt (a) durch eine Steuerung umfaßt, die eine Fernsteuerung enthält.

## Revendications

1. Procédé de déshumidification pour l'économie d'énergie d'un climatiseur (1), le procédé comprenant les étapes consistant à déterminer une fréquence d'un compresseur (11) et à régler la vitesse de rotation d'un ventilateur d'extérieur (22), **caractérisé en ce qu'**il comprend en outre les étapes consistant à :
(a) détecter une humidité à l'intérieur par un capteur d'humidité à l'intérieur installé dans le climatiseur (1) et comparer l'humidité à l'intérieur détectée à une humidité de consigne pour obtenir une différence d'humidité (ΔH) entre l'humidité à l'intérieur détectée et l'humidité de consigne ;
(b) régler une vitesse de rotation du ventilateur d'intérieur (35) en fonction de la différence d'humidité (ΔH) entre l'humidité à l'intérieur détectée et l'humidité de consigne obtenue à l'étape (a) ;
(c) régler ladite fréquence du compresseur (11) via un algorithme de fonctionnement de compresseur en fonction de la différence d'humidité (ΔH) entre l'humidité à l'intérieur détectée et l'humidité de consigne obtenue à l'étape (a) ;
(d) régler la vitesse de rotation d'un ventilateur d'extérieur (22) pour maintenir uniforme une température à l'intérieur par un algorithme de fonctionnement de ventilateur d'extérieur en fonction de la différence d'humidité (ΔH) entre l'humidité à l'intérieur détectée et la fréquence du compresseur (11) obtenue à l'étape (c) et l'humidité à l'intérieur ; et
(e) faire fonctionner les ventilateurs d'intérieur (35) et d'extérieur (22) et le compresseur (11) en fonction des vitesses de rotation des ventilateurs d'intérieur (35) et d'extérieur (22) et de la fréquence du compresseur (11) réglées dans les étapes (b) à (d), moyennant quoi une opération de déshumidification d'intérieur est effectuée en continu et ladite température uniforme à l'intérieur est maintenue.

2. Procédé de déshumidification selon la revendication 1, comprenant en outre l'étape de commande par rétroaction consistant à : juger si l'humidité à l'intérieur est dans une plage de confort et la température à l'intérieur est maintenue uniforme et si l'humidité à l'intérieur n'est pas dans une plage de confort ou la température à l'intérieur a changé, répéter les étapes (a) à (e) jusqu'à ce que l'humidité à l'intérieur soit dans la plage de confort et la température à l'intérieur soit maintenue uniforme.

3. Procédé de déshumidification selon la revendication 1, dans lequel l'étape (b) comprend les étapes consistant à :
(b-1) si la différence d'humidité (ΔH) entre l'humidité à l'intérieur et l'humidité de consigne est inférieure ou égale à 10 % de l'humidité de consigne, régler la vitesse de rotation du ventilateur d'intérieur (35) pour souffler légèrement ; et
(b-2) si la différence d'humidité (ΔH) entre l'humidité à l'intérieur et l'humidité de consigne est supérieure à 10 % de l'humidité de consigne, régler la vitesse de rotation du ventilateur d'intérieur (35) pour souffler fortement.

4. Procédé de déshumidification selon la revendication 1, dans lequel l'algorithme de fonctionnement de compresseur comprend les étapes consistant à :
(c-1) détecter l'humidité par le capteur d'humidité à l'intérieur installé dans le climatiseur (1) et comparer l'humidité à l'intérieur détectée à l'humidité de consigne pour obtenir la différence d'humidité (ΔH) entre l'humidité à l'intérieur détectée et l'humidité de consigne ;
(c-2) comparer la différence d'humidité obtenue à l'étape (c-1) avec une différence d'humidité de consigne (ΔH) fixée dans le climatiseur (1) ; et
(c-3) régler la fréquence du compresseur (11) correspondante à la différence d'humidité (ΔH) (humidité à l'intérieur - humidité de consigne) en fonction de la comparaison dans l'étape (c-2).

5. Procédé de déshumidification selon la revendication 1, dans lequel l'algorithme de fonctionnement de compresseur comprend les étapes consistant à :
sous une référence où, quand la différence d'humidité (ΔH) est de 30 % ou plus, la fréquence du compresseur (11) est fixée à une première fréquence F5 du compresseur (11),
(c-3-i) quand la différence d'humidité (ΔH) est supérieure ou égale à 25 % et inférieure ou égale à 29 %, régler la fréquence du compresseur (11) à une deuxième fréquence F4 du compresseur (11) qui est inférieure à la première fréquence F5 du compresseur (11) d'un échelon ;
(c-3-ii) quand la différence d'humidité (ΔH) est supérieure ou égale à 20 % et inférieure ou égale à 24 %, régler la fréquence du compresseur (11) à une troisième fréquence F3 du compresseur (11) qui est inférieure à la deuxième fréquence F4 du compresseur (11) d'un échelon ;
(c-3-iii) quand la différence d'humidité (ΔH) est supérieure ou égale à 10 % et inférieure ou égale à 19 %, régler la fréquence du compresseur (11) à une quatrième fréquence F2 du compresseur (11) qui est inférieure à la troisième fréquence F3 du compresseur (11) d'un échelon ; (c-3-iv) quand la différence d'humidité (ΔH) est supérieure ou égale à -5 % et inférieure ou égale à 9 %, régler la fréquence du compresseur (11) à une cinquième fréquence F1 du compresseur (11) qui est inférieure à la quatrième fréquence F2 du compresseur (11) d'un échelon ; et
(c-3-v) quand la différence d'humidité (ΔH) est de -6 % ou moins, régler la fréquence du compresseur (11) à zéro (OFF).

6. Procédé de déshumidification selon la revendication 1, dans lequel l'algorithme de fonctionnement de ventilateur d'extérieur comprend les étapes consistant à :
(d-1) comparer la fréquence du compresseur (11) commandé de manière variable par l'algorithme de fonctionnement de compresseur avec l'humidité à l'intérieur détectée par le capteur d'humidité à l'intérieur installé dans le climatiseur (1) ; et
(d-2) régler la vitesse de rotation du ventilateur d'extérieur (22) proportionnellement à la fréquence commandée de manière variable du compresseur (11), moyennant quoi l'opération de déshumidification à l'intérieur peut être effectuée dans une condition de confort en utilisant la fréquence commandée de manière variable du compresseur (11).

7. Procédé de déshumidification selon la revendication 1, dans lequel l'algorithme de fonctionnement de ventilateur d'extérieur comprend les étapes consistant à :
sous une référence où, quand l'humidité à l'intérieur est de 75 % ou plus et la fréquence de réglage du compresseur (11) est F1, la vitesse de rotation du ventilateur d'extérieur (22) est réglée à 100 %,
(d-2-i) quand l'humidité à l'intérieur est de 75 % ou plus et la fréquence de réglage du compresseur (11) est F2, régler la vitesse de rotation du ventilateur d'extérieur (22) à 98 % ;
(d-2-ii) quand l'humidité à l'intérieur est de 75 % ou plus et la fréquence de réglage du compresseur (11) est F3, régler la vitesse de rotation du ventilateur d'extérieur (22) à 96 % ;
(d-2-iii) quand l'humidité à l'intérieur est de 75 % ou plus et la fréquence de réglage du compresseur (11) est F4, régler la vitesse de rotation du ventilateur d'extérieur (22) à 92 % ;
(d-2-iv) quand l'humidité à l'intérieur est de 75 % ou plus et la fréquence de réglage du compresseur (11) est F5, régler la vitesse de rotation du ventilateur d'extérieur (22) à 86 % ;
(d-2-v) quand l'humidité à l'intérieur est supérieure ou égale à 65 % ou inférieure ou égale à 74 % et la fréquence de réglage du compresseur (11) est F1, régler la vitesse de rotation du ventilateur d'extérieur (22) à 85 % ;
(d-2-vi) quand l'humidité à l'intérieur est supérieure ou égale à 65 % ou inférieure ou égale à 74 % et la fréquence de réglage du compresseur (11) est F2, régler la vitesse de rotation du ventilateur d'extérieur (22) à 86 % ;
(d-2-vii) quand l'humidité à l'intérieur est supérieure ou égale à 65 % ou inférieure ou égale à 74 % et la fréquence de réglage du compresseur (11) est F3, régler la vitesse de rotation du ventilateur d'extérieur (22) à 90 % ;
(d-2-viii) quand l'humidité à l'intérieur est supérieure ou égale à 65 % ou inférieure ou égale à 74 % et la fréquence de réglage du compresseur (11) est F4, régler la vitesse de rotation du ventilateur d'extérieur (22) à 85 % ;
(d-2-ix) quand l'humidité à l'intérieur est supérieure ou égale à 65 % ou inférieure ou égale à 74 % et la fréquence de réglage du compresseur (11) est F5, régler la vitesse de rotation du ventilateur d'extérieur (22) à 80 % ;
(d-2-x) quand l'humidité à l'intérieur est supérieure ou égale à 55 % ou inférieure ou égale à 64 % et la fréquence de réglage du compresseur (11) est F1, régler la vitesse de rotation du ventilateur d'extérieur (22) à 70 % ;
(d-2-xi) quand l'humidité à l'intérieur est supérieure ou égale à 55 % ou inférieure ou égale à 64 % et la fréquence de réglage du compresseur (11) est F2, régler la vitesse de rotation du ventilateur d'extérieur (22) à 76 % ;
(d-2-xii) quand l'humidité à l'intérieur est supérieure ou égale à 55 % ou inférieure ou égale à 64 % et la fréquence de réglage du compresseur (11) est F3, régler la vitesse de rotation du ventilateur d'extérieur (22) à 81 % ;
(d-2-xiii) quand l'humidité à l'intérieur est supérieure ou égale à 55 % ou inférieure ou égale à 64 % et la fréquence de réglage du compresseur (11) est F4, régler la vitesse de rotation du ventilateur d'extérieur (22) à 78 % ;
(d-2-xiv) quand l'humidité à l'intérieur est supérieure ou égale à 55 % ou inférieure ou égale à 64 % et la fréquence de réglage du compresseur (11) est F5, régler la vitesse de rotation du ventilateur d'extérieur (22) à 75 % ;
(d-2-xv) quand l'humidité à l'intérieur est supérieure ou égale à 45 % ou inférieure ou égale à 54 % et la fréquence de réglage du compresseur (11) est F1, régler la vitesse de rotation du ventilateur d'extérieur (22) à 54 % ;
(d-2-xvi) quand l'humidité à l'intérieur est supérieure ou égale à 45 % ou inférieure ou égale à 54 % et la fréquence de réglage du compresseur (11) est F2, régler la vitesse de rotation du ventilateur d'extérieur (22) à 63 % ;
(d-2-xvii) quand l'humidité à l'intérieur est supérieure ou égale à 45 % ou inférieure ou égale à 54 % et la fréquence de réglage du compresseur (11) est F3, régler la vitesse de rotation du ventilateur d'extérieur (22) à 71 % ;
(d-2-xviii) quand l'humidité à l'intérieur est supérieure ou égale à 45 % ou inférieure ou égale à 54 % et la fréquence de réglage du compresseur (11) est F4, régler la vitesse de rotation du ventilateur d'extérieur (22) à 71 % ;
(d-2-xix) quand l'humidité à l'intérieur est supérieure ou égale à 45 % ou inférieure ou égale à 54 % et la fréquence de réglage du compresseur (11) est F5, régler la vitesse de rotation du ventilateur d'extérieur (22) à 70 % ;
(d-2-xx) quand l'humidité à l'intérieur est de 44 % ou moins et la fréquence du compresseur est F1, régler la vitesse de rotation du ventilateur d'extérieur (22) à 39 % ;
(d-2-xxi) quand l'humidité à l'intérieur est de 44 % ou moins et la fréquence du compresseur est F2, régler la vitesse de rotation du ventilateur d'extérieur (22) à 51 % ;
(d-2-xxii) quand l'humidité à l'intérieur est de 44 % ou moins et la fréquence du compresseur est F3, régler la vitesse de rotation du ventilateur d'extérieur (22) à 63 % ;
(d-2-xxiii) quand l'humidité à l'intérieur est de 44 % ou moins et la fréquence du compresseur est F4, régler la vitesse de rotation du ventilateur d'extérieur (22) à 63 % ; et
(d-2-xxiv) quand l'humidité à l'intérieur est de 44 % ou moins et la fréquence du compresseur est F5, régler la vitesse de rotation du ventilateur d'extérieur (22) à 63 %,
moyennant quoi la rotation de vitesse du ventilateur d'extérieur (22) dépend de l'étape de différence d'humidité (ΔH).

8. Procédé de déshumidification selon la revendication 1, consistant à déterminer la fréquence du compresseur (11) via l'algorithme de fonctionnement de compresseur en fonction de la différence d'humidité (ΔH) entre l'humidité de consigne et l'humidité à l'intérieur.

9. Procédé de déshumidification selon la revendication 1, consistant à régler la vitesse de rotation d'un ventilateur d'extérieur (22) via l'algorithme de fonctionnement de ventilateur d'extérieur en fonction de ladite différence de température entre la température de référence et la température à l'intérieur.

10. Procédé selon la revendication 1, consistant à fixer l'humidité de consigne de l'étape (a) par un dispositif de contrôle comprenant un dispositif de contrôle à distance.
